**Europäisches Patentamt**

**European Patent Office**

**Office européen des brevets**

(19)

(11) Numéro de publication : **0 438 325 B1**

(12)

# FASCICULE DE BREVET EUROPEEN

(45) Date de publication du fascicule du brevet :
**15.07.92 Bulletin 92/29**

(51) Int. Cl.⁵ : **B62D 25/08**

(21) Numéro de dépôt : **91400002.1**

(22) Date de dépôt : **02.01.91**

(54) **Cloison séparatrice pour coque de véhicule automobile.**

(30) Priorité : **19.01.90 FR 9000628**

(43) Date de publication de la demande :
**24.07.91 Bulletin 91/30**

(45) Mention de la délivrance du brevet :
**15.07.92 Bulletin 92/29**

(84) Etats contractants désignés :
**DE ES GB IT SE**

(56) Documents cités :
**EP-A- 0 291 385**
**FR-A- 2 614 257**

(72) Inventeur : **Betencourt, Joseph**
**14A rue des Vignes**
**F-25150 Autechaux Roide (FR)**
Inventeur : **Henigue, Christian**
**6 rue des Vosges, Suarce**
**F-90000 Belfort (FR)**
Inventeur : **Gourlot, Thierry**
**18 rue de Brognard**
**F-25600 Vieux Charmont (FR)**

(74) Mandataire : **Mestre, Jean et al**
**c/o CABINET LAVOIX 2, place d'Estienne**
**d'Orves**
**F-75441 Paris Cédex 09 (FR)**

(73) Titulaire : **ECIA - EQUIPEMENTS ET**
**COMPOSANTS POUR L'INDUSTRIE**
**AUTOMOBILE**
**F-25400 Audincourt (Doubs) (FR)**

## Description

La présente invention concerne les véhicules automobiles et est relative, plus particulièrement, à une cloison séparatrice destinée à être placée entre un compartiment antérieur, de préférence moteur, et un habitacle d'une structure ou coque de véhicule automobile.

La tendance contemporaine des techniques de fabrication des véhicules automobiles est de concevoir leur structure ou coque sous forme modulaire. Outre ce fait, ces structures modulaires sont préalablement équipées d'entités montées et assemblées, voire contrôlées, hors des lignes proprement dites d'assemblage. Ces entités prééquipées se composent souvent elles-mêmes d'ensembles et de sous-ensembles qui ont été préalablement construits et contrôlés avant d'être réunis pour constituer ces entités.

Ce type de conception permet un haut degré d'automatisation et autorise la mise en oeuvre de robots et d'automates programmables. Outre cet avantage, ce type de solution permet d'adapter très rapidement un véhicule aux changements d'esthétiques de la mode et aux attentes des utilisateurs.

Ce type de solutions est, par exemple, illustré dans les demandes de brevets français FR-A-2 614 257 FR-A-2 615 156 et FR-A-2 635 069 de la Demanderesse.

Quel que soit le type de solution pratiquement retenue, le compartiment antérieur, très souvent moteur, d'une structure de véhicule est séparé de l'habitacle par une cloison ou tablier. Dans le cas où le véhicule est construit sous forme modulaire, l'entité antérieure qui comprend par exemple le groupe mototracteur et le train de roues avec sa suspension, est souvent aussi munie d'une traverse qui permet de clore la baie du pare-brise à la partie inférieure de celle-ci.

La cloison séparatrice reçoit aussi, habituellement, directement ou indirectement, en particulier une colonne de direction ce qui fait que cette cloison doit pouvoir supporter et transmettre des efforts importants.

On comprend donc que pour ce type de solution modulaire, il est aussi primordial que cette cloison participe à la résistance mécanique de l'ossature, structure, coque ou caisse du véhicule.

Il est classique d'équiper les véhicules d'un système de climatisation qui est habituellement réparti de part et d'autre de cette cloison entre le compartiment antérieur et l'habitacle.

Le but de l'invention est de remédier à la plupart des inconvénients des solutions connues en donnant à une telle cloison une configuration qui lui permet de supporter et/ou de transmettre des efforts qui étaient précédemment transmis essentiellement notamment par la traverse inférieure de baie de pare-brise.

L'invention a pour objet une cloison séparatrice perfectionnée pour structure de véhicule automobile qui est destinée à être placée entre un compartiment antérieur moteur et un habitacle. Cette cloison séparatrice est caractérisée en ce qu'elle comprend un panneau pratiquement rectangulaire dont les quatre côtés sont munis d'un rebord périphérique et délimitent une cuvette centrale avec un fond et qui est conformé pour obtenir au moins deux poutres longitudinales qui sont pratiquement parallèles aux grands côtés, qui sont approximativement en U et ouvertes à l'opposé de ce fond, qui sont pratiquement continues d'un des petits côtés à l'autre, et qui sont l'une marginale située à proximité d'un de ces grands côtés et l'autre médiane située à proximité du milieu de la cuvette. De préférence, la poutre marginale est destinée à constituer un caisson pour un système de climatisation et la poutre médiane est destinée à constituer un logement pour une direction.

D'autres caractéristiques de l'invention ressortiront de la lecture de la description et des revendications qui suivent et de l'examen du dessin annexé, donné seulement à titre d'exemple, où :

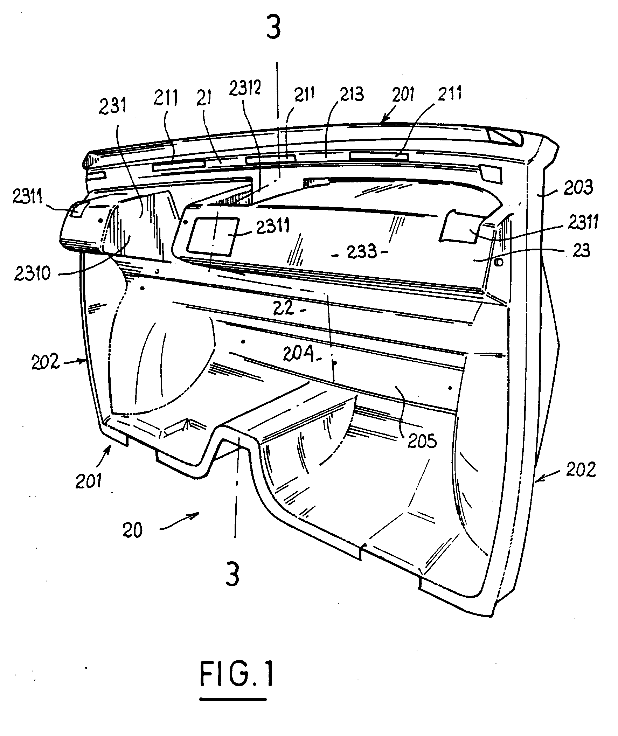

– la Figure 1 est une vue perspective schématique d'une des faces d'un mode de réalisation d'une cloison séparatrice selon l'invention;

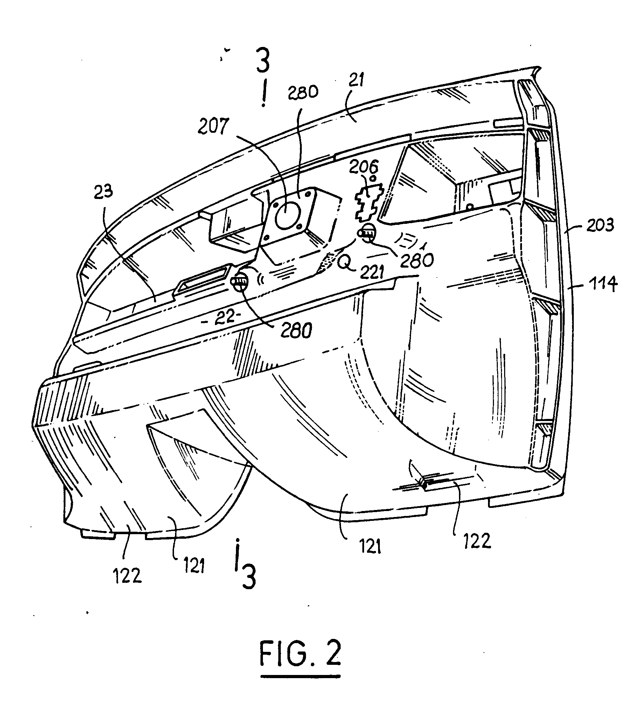

– la Figure 2 est une vue perspective schématique de la face opposée de la cloison séparatrice de la Figure 1;

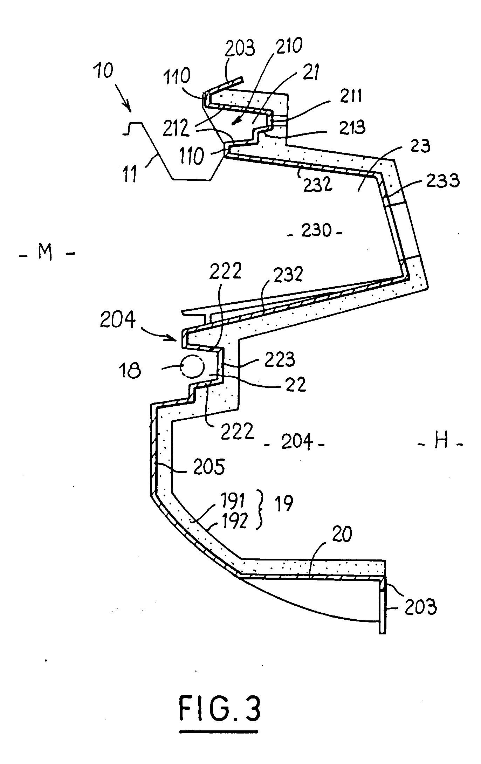

– la Figure 3 est une coupe transversale verticale de ce mode de réalisation des Figures 1 et 2 selon le plan 3-3 et;

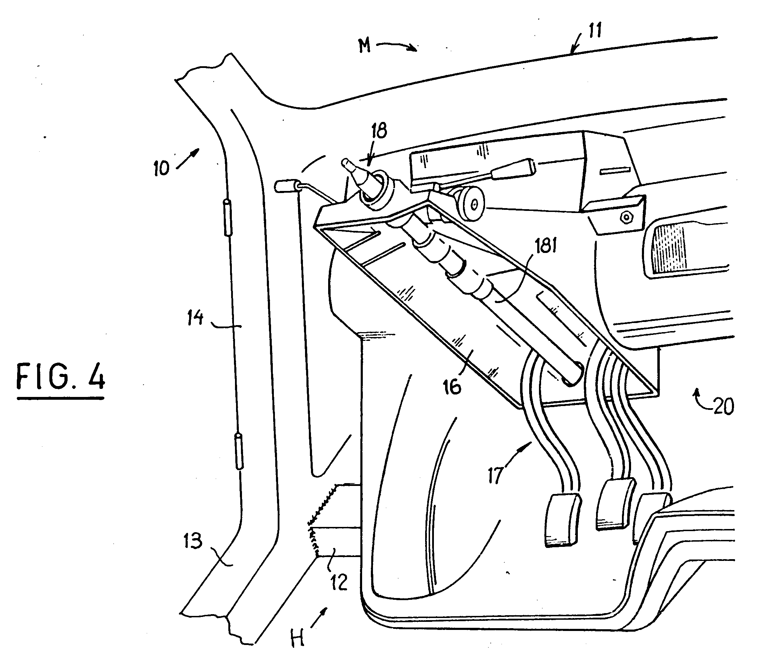

– la Figure 4 est une vue partielle, analogue à celle de la Figure 1, d'une cloison selon l'invention partiellement équipée et placée à proximité d'une structure seulement dessinée en partie.

Les techniques de construction en matière d'automobile étant bien connues, on ne décrira par la suite que ce qui se rapporte directement ou indirectement à l'invention. Pour le surplus, le spécialiste de la technique considérée puisera dans les solutions classiques courantes à sa disposition pour faire face aux problèmes particuliers auxquels il est confronté.

Dans ce qui suit, un même numéro de référence identifie toujours un élément homologue quel que soit le mode de réalisation.

Une cloison séparatrice perfectionnée selon l'invention est destinée à équiper une structure 10 de véhicule automobile pour séparer un compartiment antérieur par exemple moteur M d'un habitable H. Comme il est classique, cette structure 10, seulement représentée partiellement et schématiquement comprend un auvent 11, une traverse inférieure 12, un longeron avant 13, des montants latéraux 14 et porte des connecteurs non illustrés par exemple flexibles, un support de colonne de direction et pédalier 16 avec un jeu de pédales de pédalier 17 et une colonne de direction 18. Tout ceci est classique et, par exemple, exposé dans les demandes de brevets précitées.

Comme on le voit en observant les figures du dessin, une cloison séparatrice selon l'invention comprend un panneau 20, pratiquement rectangulaire dont les quatre côtés, les grands 201 et les petits 202, sont munis d'un rebord 203 périphérique. Ces côtés délimitent une cuvette 204 centrale avec un fond 205.

Comme on peut l'observer, ce panneau est conformé pour obtenir au moins deux poutres, une poutre marginale 21 et une poutre médiane 22, toutes deux longitudinales et pratiquement parallèles aux grands côtés 201. On voit que ces deux poutres 21 et 22 ont une section droite approximativement en U et sont ouvertes à l'opposé de ce fond 205. Comme on peut le relever, les deux poutres 21, 22 sont pratiquement continues d'un des petits côtés 202 à l'autre. Comme on peut le voir, la poutre 21 marginale est située à proximité d'un des grands côtés 201 alors que la poutre médiane 22 est située à proximité du milieu de la cuvette 204.

La poutre marginale 21 comprend deux ailes 212 en vis-à-vis pratiquement parallèles aux grands côtés 201, et un pont 213 reliant les ailes 212. De préférence, au moins une ouie 211 transperce localement la poutre 21, de préférence le pont 213. Comme on peut l'observer, de part et d'autre de la poutre marginale 21, à l'extérieur des ailes 212, le fond 205 de la cuvette centrale forme des embases 110. Ces embases sont plus particulièrement destinées à recevoir l'auvent 11. De la sorte, on comprend que cette poutre initialement ouverte peut alors être close et forme ainsi un caisson 210, tout spécialement apte à servir de conduite d'air pour un système de climatisation non représenté. La disposition des ouies 211, leur orientation et leur répartition, éventuellement complétées par des évents latéraux illustrés, permet de distribuer un rideau d'air vers le pare-brise ou des flux dans l'habitacle; ceci est bien connu et c'est pourquoi on ne s'y étendra pas plus amplement.

Comme on le voit, la poutre médiane 22 comprend deux ailes 222 en vis-à-vis, pratiquement parallèles aux grands côtés 201 et un pont 223 reliant les ailes 222. Comme on peut l'observer, cette poutre médiane est transpercée d'un orifice 221 destiné à être traversé par un arbre 181 d'une colonne de direction 18.

La cloison séparatrice selon l'invention comprend un panneau 20 qui est aussi conformé pour obtenir une poutre 23 intermédiaire qui est, elle aussi, pratiquement parallèle aux grands côtés 201. Comme on peut l'observer, cette poutre intermédiaire 23 est située entre les poutres marginale 21 et médiane 22. On peut noter aussi que cette poutre est discontinue, interrompue entre les deux petits côtés 202 par une dépression 231. La poutre 23 intermédiaire à une configuration approximativement en U et est ouverte à l'opposé du fond 205. Comme on peut l'observer, la hauteur au-dessus du fond 205 de cette poutre intermédiaire 23 est supérieure à celle des poutres marginale 21 et médiane 22. De préférence, cette poutre intermédiaire est conformée pour constituer une enceinte 230 destinée à recevoir des accessoires. Comme on peut l'observer, cette poutre intermédiaire 23 en configuration de U évasé est délimitée par deux flancs 232 en regard et par une façade 233 les réunissant. On peut noter que la dépression 231 est délimitée par des joues 2310 opposées pratiquement perpendiculaires à ces flanc 232 et façade 233. On observera aussi que cette poutre intermédiaire 23 est traversée par des ouvertures 2311 et des dégagements 2312 situés, de préférence, sur la façade 233.

En examinant les figures du dessin, on voit aussi que le fond 205 est transpercé de découpes 206 pour la traversée des connecteurs et de passages 207 pour les pédales d'un pédalier 17. De préférence, les pédales du pédalier 17 sont portées par un support de colonne de direction-pédalier 16 qui est logé dans la dépression 231. Ce fond forme aussi des supports 280 pour recevoir un système d'assistance au freinage et une monture de la crémaillère de la colonne de direction.

Comme on peut l'observer, le fond 205 comprend, entre la poutre médiane 22 et le grand côté 201 opposé à celui proche de la poutre marginale 21, des appuis 121 et des assises 122 pour recevoir, respectivement, la traverse inférieure 12 et longeron avant 13 de l'ossature 10 dont il a été question précédemment.

On observera aussi que le rebord périphérique 203 porte, sur ses petits côtés 202, des appuis 114 destinés à recevoir les montants latéraux 14 de la structure.

On comprend donc tout l'intérêt de la cloison séparatrice perfectionnée selon l'invention dont la conformation en poutre multiple lui confère une aptitude à résister et à transmettre et répartir des efforts et qui, outre, cette fonction structurelle permet d'incorporer une partie d'un système de climatisation qui pour le reste, notamment avec ses échangeurs et pulseurs, est de préférence porté par l'entité antérieure qui est équipée du groupe mototracteur avec les circuits de refroidissement appropriés.

Outre cette fonction mécanique de participation à la structure, ossature ou coque ou caisse en résistant aux efforts de déformation et en supportant les efforts de la colonne de direction proprement dite et de sa crémaillère, la cloison selon l'invention sert de desserte, de servante d'atelier pour l'assemblage puisqu'elle peut recevoir, d'un côté, un support de crémaillère de la direction et un système d'assistance au freinage et, de l'autre côté, une planche de bord et un support de colonne de direction-pédalier.

Une telle cloison séparatrice selon l'invention peut être fabriquée avec des matériaux synthétiques auxquels sont ajoutés des charges et/ou des renforts sous forme de fibres appropriées, afin de lui conférer les propriétés, notamment mécaniques, recherchées. On utilise, par exemple, des matériaux désignés dans la technique sous la désignation SMC (Sheet Molding Compound) en résine polyester ou phénolique que l'on peut mettre en forme par compression ou bien d'autres matériaux désignés par les lettres TRE (Thermoplastique Renforcé Estempable). Cette pièce peut être aussi obtenue par moulage par injection.

Avec cette technique, il est possible d'obtenir une cloison selon l'invention qui donne satisfaction et dont la masse dépasse à peine une dizaine de kilogrammes pour une surface totale voisine du mètre carré et cela avec une épaisseur moyennne de quatre millimètres environ et quelques surépaisseurs locales.

Pour améliorer le comportement sonore de cette cloison selon l'invention et, en particulier, améliorer l'insonorisation de l'habitacle, cette dernière est munie d'un revêtement 19 à base de mousse 191 portant sur sa face extérieure un septum ou pellicule 192 pour lui donner un aspect et un toucher attrayant, comme il est classique.

En choisissant convenablement les matériaux, on peut faire en sorte que cette cloison perfectionnée selon l'invention serve en outre de barrière thermique et joue aussi le rôle de barrière coupe-feu suivant les normes applicables en la matière.

Ce qui précède permet d'apprécier les nombreux avantages procurés par une cloison selon l'invention comparativement aux cloisons antérieures classiques.

**Revendications**

1. Cloison séparatrice pour structure de véhicule automobile destinée à être placée entre un compartiment antérieur notamment moteur et un habitacle, caractérisée en ce qu'elle comprend un panneau (20) pratiquement rectangulaire dont les quatre côtés (201, 202) sont munis d'un rebord (203) périphérique délimitant une cuvette (204) centrale avec un fond (205) et conformé pour obtenir au moins deux poutres (21, 22) longitudinales qui sont pratiquement parallèles aux grands côtés (201), qui sont approximativement en U et ouvertes à l'opposé de ce fond (205), qui sont pratiquement continues d'un des petits côtés (202) à l'autre et qui sont l'une (21) marginale située à proximité d'un de ces grands côtés (201) et l'autre (22) médiane située à proximité du milieu de la cuvette (204).

2. Cloison selon la revendication 1, caractérisée en ce que ce panneau (20) est conformé pour obtenir une poutre (23) intermédiaire qui est pratiquement parallèle aux grands côtés (201), qui est située entre ces poutres marginale (21) et médiane (22), qui est discontinue interrompue entre les deux petits côtés (202), qui est approximativement en U et ouverte à l'opposé de ce fond (205), et dont la hauteur au-dessus de ce fond (205) est supérieure à celles des poutres marginale (21) et médiane (22).

3. Cloison selon la revendication 1 ou 2, où la structure comprend un auvent (11), caractérisée en ce que le fond (205), de part et d'autre de cette poutre marginale (21), forme des embases (110) pour recevoir cet auvent (11) de manière à clore cette poutre (21) en un caisson (210) de conduite d'air, et en ce que cette poutre (21) est transpercée localement d'au moins une ouie (211) faisant communiquer le caisson (210) avec l'extérieur.

4. Cloison selon la revendication 3, caractérisée en ce que cette poutre marginale (21) comprend deux ailes (212) en vis-à-vis pratiquement parallèles aux grands côtés (201) et un pont (213) reliant ces ailes (212) et dans lequel est ménagée cette ouie (211).

5. Cloison selon l'une quelconque des revendications 1 à 4, caractérisée en ce que cette poutre médiane (22) comprend deux ailes (222) en vis-à-vis pratiquement parallèles aux grands côtés (201) et un pont (223) reliant ces ailes (222) et dans lequel est ménagé un orifice (221).

6. Cloison selon l'une quelconque des revendications 2 à 5, caractérisée en ce que cette poutre intermédiaire (23) a une configuration en U évasé avec deux flancs (232) en regard et une façade (233) les réunissant, est interrompue par une dépression (231) délimitée par des joues (2310) opposées pratiquement perpendiculaires à ces flancs (232) et façade (233), est traversée par des ouverture (2311) et dégagement (2312) de préférence situés sur sa façade (233).

7. Cloison selon l'une quelconque des revendications 1 à 6, caractérisée en ce que le fond (205) est transpercé de découpes (206) et de passages (207).

8. Cloison selon l'une quelconque des revendications 6 et 7, où ce véhicule est équipé d'un support de colonne de direction-pédalier (16), caractérisée en ce que cette dépression (231) est destinée à recevoir ce support de colonne de direction-pédalier.

9. Cloison selon l'une quelconque des revendications 1 à 8, où la structure comprend des traverse (12) inférieure et longeron (13), caractérisée en ce que le fond (205) comprend entre la poutre médiane (22) et le grand côté (201) opposé à celui proche de la poutre marginale (21), des appuis (121) et assises (122) pour recevoir respectivement ces traverse (12) et longeron (13).

10. Cloison selon l'une quelconque des revendications 1 à 4, où la structure comprend des montants (14) de baie vitrée, caractérisée en ce que le rebord (203) parallèle aux petits côtés (202) comprend des appuis (114) pour recevoir ces montants (14).

11. Cloison selon l'une quelconque des revendications 1 à 10, caractérisée en ce que le panneau (20) porte au moins sur sa cuvette un revêtement d'isolation (19) fait de préférence d'une mousse (191) recouverte d'une pellicule (192).

**Patentansprüche**

1. Trennwand für die Karosserie eines Kraftfahrreugs, zur Anbringung zwischen einem vorderen Fahrzeugraum, insbesondere dem Motorraum, und der Fahrgastkabine, dadurch gekennzeichnet, daß sie eine im wesentlichen rechteckige Platte (20) aufweist, deren vier Seiten (201,202) mit einer Randleiste (203) versehen sind, die eine zentrale Schale (204) mit einem Boden (205) begrenzt und so gestaltet ist, daß wenigstens zwei längsverlaufende Träger (21,22) gebildet werden, die annähernd parallel zu den längeren Seiten (201) verlaufen, annähemd U-Form haben und entgegengesetzt zu dem Boden (205) geöffnet sind und die im wesentlichen von einer der kürzeren Seiten (202) zur anderen durchgehen und von denen sich der eine als randständiger Träger (21) in der Nähe einer der längeren Seiten (201) und der andere als mittlerer Träger (22) in der Nähe der Mitte der Schale (204) befindet.

2. Trennwand nach Anspruch 1, dadurch gekennzeichnet, daß die Platte (20) so gestaltet ist, daß ein im wesentlichen parallel zu den längeren Seiten (201) verlaufender Zwischenträger (23) gebildet wird, der sich zwischen dem randständigen Träger (21) und dem mittleren Träger (22) befindet und der annähernd U-Form hat, entgegengesetzt zu dem Boden (205) geöffnet ist und zwischen den beiden kürzeren Seiten (202) unterbrochen ist, und dessen Höhe über dem Boden (205) größer ist als diejenige des randständigen Trägers (21) und des mittleren Trägers (22).

3. Trennwand nach Anspruch 1 oder 2, wobei die Fahrzeugkarosserie einen Lufteinlaß (11) aufweist, dadurch gekennzeichnet, daß der Boden (205) beiderseits des randständigen Trägers (21) Stützflächen (110) für den Lufteinlaß (11) bildet, derart, daß der Träger (21) in einen Luftleitkasten (20) einbezogen wird, und daß dieser Träger (21) stellenweise durch wenigstens eine Öffnung durchbrochen ist, die den Luftleitkasten (210) mit dem Außenraum verbindet.

4. Trennwand nach Anspruch 3, dadurch gekennzeichnet, daß der randständige Träger (21) zwei im wesentlichen parallel zu den längeren Seiten (201) verlaufende, einander gegenüberliegende Flügel (212) und eine diese Flügel verbindende Brücke (213) aufweist, in der die Öffnungen (211) ausgebildet sind.

5. Trennwand nach einem der Ansprüche 1 bis 4, dadurch gekennzeichnet, daß der mittlere Träger (22) zwei im wesentlichen parallel zu den längeren Seiten (201) verlaufende, einander gegenüberliegende Flügel (220) und eine diese Flügel (222) verbindende Brücke (223) aufweist, in der eine Öffnung (221) ausgespart ist.

6. Trennwand nach einem der Ansprüche 2 bis 5, dadurch gekennzeichnet, da der Zwischenträger (23) eine erweiterte U-Form mit zwei gegenüberliegenden Flanken (232) und einer diese verbindenden Front (233) aufweist, von einer Einsenkung (231) unterbrochen ist, die durch einander gegenüberliegende und im wesentlichen rechtwinklig zu den Flanken (232) und der Front (233) orientierte Wangen (2310) begrenzt ist, und daß der Träger von Öffnungen (2311) und Ausnehmungen (2312) durchbrochen ist, die sich vorzugsweise in der Front (233) befinden.

7. Trennwand nach einem der Ansprüche 1 bis 6, dadurch gekennzeichnet, daß der Boden (205) von Ausschnitten (206) und Kanälen (207) durchbrochen ist.

8. Trennwand nach Anspruch 6 oder 7, wobei die Karosserie einen Lenksäulen- und Pedalträger (16) aufweist, dadurch gekennzeichnet, daß die Einsenkung (231 ) zur Aufnahme des Lenksäulen- und Pedalträgers ausgebildet ist.

9. Trennwand nach einem der Ansprüche 1 bis 8, wobei die Karosserie eine untere Traverse (12) und einen Längsholm (13) aufweist, dadurch gekennzeichnet, daß der Boden (205) zwischen dem mittleren Träger (22) und der längeren Seite (201), die der näher an dem randständigen Träger (21) gelegenen Seite entgegengesetzt ist, Anlageflächen (121) und Sitze (122) für die Traverse (12) bzw. den Längsholm (13) aufweist.

10. Trennwand nach einem der Ansprüche 1 bis 4, wobei die Karosserie Dachsäulen (14) aufweist, dadurch gekennzeichnet, daß die Randleiste (203), die parallel zu den kürzeren Seiten (202) verläuft, Anlageflächen (114) für die Dachsäulen (14) aufweist.

11. Trennwand nach einem der Ansprüche 1 bis 10, dadurch gekennzeichnet, daß die Platte (20) wenigstens auf ihrer Schale eine isolierende Auskleidung (19) trägt, vorzugsweise aus Schaumstoff (191), der mit einer Folie (192) bedeckt ist.

**Claims**

1. A separating partition for a motor vehicle structure intended to be placed between a front compartment, in particular an engine compartment and a passenger compartment, characterized in that it comprises a virtually rectangular panel (20) whose four sides (201, 202) are provided with a peripheral flange (203) delimiting a central dished portion (204) with a bottom (205) and shaped so as to obtain at least two longitudinal box sections (21, 22) which are virtually parallel to the long sides (201), are approximately channel-shaped and open on the opposite side to this bottom (205), and are virtually continuous from one of the small sides (202) to the other, and whereof one (21) at the edge is situated near one of these long sides (201) and the other the median one (22) is situated near the centre of the dished portion (204).

2. A partition according to claim 1, characterized in that this panel (20) is shaped so as to obtain an intermediate box section (23) which is virtually parallel to the long sides (201), is situated between this marginal box section (21) and median box section (22), and is discontinuous, being interrupted between the two short sides (202), and is approximately channel-shaped and open on the opposite side to this bottom (205) and whose height above this bottom (205) exceeds that of the marginal box section (21) and of the median box section (22).

3. A partition according to claim 1 or 2, where the structure comprises a scuttle, characterized in that the bottom (205) forms on either side of this marginal box section (21), mounting bases (110) for receiving this scuttle (11) so as to close this box section (21) into an air duct enclosure (210), and in that this box section (21) is locally pierced by at least one louvre (211) causing the air duct enclosure to communicate with the outside.

4. A partition according to claim 3, characterized in that this marginal box section (21) includes two sides (212) facing each other virtually parallel to the long sides (201) and a bridge (213) connecting these sides (212) and wherein this louvre (211) is arranged.

5. A partition according to any one of claims 1 to 4, characterized in that this median box section (22) includes two sides (222) facing each other and being virtually parallel to the long sides (201), and a bridge (223) connecting these sides (222) and wherein there is arranged an opening (221).

6. A partition according to any one of claims 2 to 5, characterized in that this intermediate box section (23) has a flaring channel-shaped configuration with two sides (232) facing each other and a front (233) joining them, is interrupted by a recess (231) delimited by opposed cheeks (2310) that are virtually perpendicular to these sides (232) and the front (233), is traversed by openings (2311) and a clearance (2312) preferably situated at its front (233).

7. A partition according to any one of claims 1 to 6, characterized in that the bottom (205) is pierced by cutouts (206) and ducts (207).

8. A partition according to any one of claims 6 and 7, wherein this vehicle is fitted with a support for the steering column-pedal unit (16), characterized in that this recess (231) is intended to receive this support for the steering column-pedal unit.

9. A partition according to any one of claims 1 to 8, wherein the structure includes a lower cross member (12) and a sill (13), characterized in that the bottom (205) includes between the median box section (22) and the long side (201) on the opposite side to that near the marginal box section (21), bearing surfaces (121) and seatings (122) for respectively receiving this cross member (12) and sill (13).

10. A partition according to any one of claims 1 to 4, wherein the structure includes windscreen posts.(14), characterized in that the flange (203) parallel to the small sides (202) includes bearing surfaces (114) for receiving these posts (14).

11. A partition according to any one of claims 1 to 10, characterized in that the panel (20) carries, at least over its dished portion, an insulating layer (19) preferably made of a foam (191) covered by a skin (192).

3

FIG.1

FIG. 2

FIG.3

FIG. 4

EP 0 438 325 B1